# EUROPEAN PATENT SPECIFICATION

(11) **EP 2 372 012 B1**
(45) Date of publication and mention of the grant of the patent: **31.08.2016**
(21) Application number: 10003480.0
(22) Date of filing: 30.03.2010
(51) Int. Cl.: D06F 58/20, D06F 58/24, A47L 15/48, A47L 15/00, D06F 58/28

(54) **Condenser unit, household appliance, and method for controlling such a household appliance**
Kondensatoreinheit, Haushaltsgerät und Verfahren zur Steuerung eines solchen Haushaltsgeräts
Unité de condensateur, appareil domestique, et procédé de contrôle de cet appareil domestique

(43) Date of publication of application: 05.10.2011
(73) Proprietor: DBK David + Baader GmbH, Nordring 26 76761 Rülzheim (DE)
(72) Inventor: Hopkin, Ian David Dr., Aberthin, Cowbridge Vale of Glamorgan CF71 7HE (GB)
(74) Representative: Winter, Brandl, Fürniss, Hübner, Röss, Kaiser, Polte - Partnerschaft mbB

(56) References cited:
- WO-A1-2007/068588
- WO-A1-2007/138064
- WO-A1-2010/003936
- DE-A1-102004 055 926
- DE-A1-102005 058 285
- DE-A1-102006 042 991
- DE-U1- 20 101 641
- GB-A- 911 433
- JP-A- S6 317 325

## Description

The invention relates to a condenser unit in accordance with the preamble of claim 1, a household appliance and a method for controlling such a household appliance.

Tumble driers are substantially according to an exhaust air principle or a condensation principle. In the case of an exhaust air principle, an air flow sucked in from the ambiance is heated and routed into a drier drum of the tumble drier containing laundry to be dried. Humidity is absorbed by the heated air flow and is subsequently returned to the ambiance.

A well-known washing machine with an integrated drier is used in accordance with the condensation principle. Air sucked in from the ambiance is heated and routed via the drier drum to a heat exchanger where the air moistened in the drier drum is dried. The tumble drier comprises Peltier elements, wherein the supply air is heated at a hot side of the Peltier elements and the exhaust air is cooled at an opposite cold side of the Peltier elements.

DE 6 926 182 U discloses a tumble drier with a process air circulating in a closed circuit. In the case of this tumble drier, Peltier elements are arranged in a loop of an air line for drying the process air. At a cold side of the Peltier elements the moistened process air is cooled while the dried process air is heated at the hot side.

Document DE 201 01 641 U1 discloses a tumble drier pursuant to the condensation principle, in the closed circuit of which the process air is cooled and heated again by means of Peltier elements. Additionally, the tumble drier comprises an air/air heat exchanger that continues to cool the air pre-cooled by the Peltier elements. Furthermore, an electric heating element is provided which continues to heat the process air heated by the Peltier elements.

DE 10 2005 060 673 A1 also shows a tumble drier used in accordance with the condensation principle, in which the process air is, in a circuit, first of all routed past the cold side and subsequently past the hot side of Peltier elements. The Peltier elements are arranged in a module insulated at its hot side from the adjacent air line by an air and vapor-permeable filter.

In document DE 10 2006 003 816 A1 another tumble drier with Peltier elements pursuant to the condensation principle is illustrated. These Peltier elements first of all withdraw in a closed circuit humidity from the process air by cooling it under the dew point and subsequently heat it again. To improve the heat pump performance of the Peltier elements arranged in series, the heat pump performance of the individual Peltier elements is adapted to the temperature difference to the process air.

Document US 2007/0101602 A1 discloses a tumble drier with Peltier elements which are used substantially for cooling the process air routed out of the drier drum. Furthermore, embodiments are shown in which Peltier elements are used for the cooling and subsequent heating of the process air.

JP 08057194 A illustrates a tumble drier with a closed circuit of a process air in which Peltier elements are arranged. After exiting from the drier drum, the process air is cooled by an additional upstream heat exchanger prior to reaching the cold side of the Peltier elements and is continued to be heated by an additional heating device after passing the hot side of the Peltier elements.

WO 2007/068588 A1 discloses a tumble drier with a closed circuit in which Peltier elements are arranged.

WO 2010/003936 A1 illustrates a heat pump type drier with an evaporator and a condenser. A heat pipe is used for cooling a compressor.

DE 10 2004 055 926 A1 discloses a household device with a dryer unit. A hot side of a Peltier element is connected with a heat pipe.

JP S 63017325 discloses a dehumidifier with a first group of fins connected with the cold side of a first Peltier element and with a second group of fins connected with the hot side of a second Peltier element. Both Peltier elements are connected via a heat pipe.

It is an object of the invention to provide a more energy-efficient household appliance, a more energy-efficient condenser unit, and a method for controlling such a household appliance.

This object is solved by a condenser unit pursuant to the features of claim 1, by a household appliance pursuant to the features of claim 2, and by a method pursuant to the features of claim 12.

In accordance with the invention, a household appliance, in particular a tumble drier, comprises a drying device for drying a process air routed in a circuit and discharged from a useful area, in particular a drier drum. Furthermore, a heating device for heating the process air supplied to the useful area is provided in the circuit. The drying device comprises a condenser that is designed in particular as an air/air heat exchanger. It comprises a thermoelectric heat pump constructed with at least two Peltier elements, the thermoelectric heat pump serving to cool the condenser and/or the process air.

This solution has the advantage that such a drying device is constructed in an energy-efficient and compact manner. Thus, it is possible to make use of the thermoelectric heat pump in particular in the initial phase of the drying process. In this initial phase, the temperature difference between the condenser and the process air is small, so that the drying of the process air is insufficient. By means of the thermoelectric heat pump it is possible to additionally cool the condenser strongly in the initial phase, so that the temperature difference between the process air and the condenser is very large, which results in an effective and energy-efficient drying of the process air. The tumble drier then operates extremely effectively even in the initial phase and the total drying time may be shortened, which results in a low energy consumption.

For the easy discharge of waste heat of the heat pump, a heat pipe is provided.

Preferably, the waste heat of the heat pump is supplied to the process air via the heat pipe downstream of the heat pump viewed in the direction of a process air flow. The waste heat may be supplied to the process air by the heat pipe with little effort with respect to device technology at any position in the circuit, which enables a simple and flexible construction of the tumble drier with respect to device technology.

The condenser advantageously comprises at least one cooling layer that is adapted to be flown through by a cooling air and that is circulated around by the process air for cooling the process air. It is arranged such that condensed liquid flows off across it to a sump.

Preferably, one section of the cooling layer forms the heat pump.

In addition to the cooling layer, further cooling layers, in particular, for example, parallel cooling layers, with or without heat pump may be provided, which are arranged such that condensed liquid is adapted to flow off across them to a sump.

In a further embodiment of the invention a second condenser is provided. It is arranged in series with the condenser comprising the heat pump, downstream thereof viewed in the direction of the process air. The condensers are thermally connected with each other via the heat pipe.

The condensers may be designed as a condenser unit, wherein a sump for the flowing off of condensed liquid may be provided after each condenser.

The heat pump is constructed in an extremely compact sandwiched manner with at least two Peltier elements. The hot sides thereof are then positioned opposite each other and the respective cool side faces in the direction of a respective cooling face of the cooling layer.

A pipe section of the heat pipe for discharging the heat is positioned in particular approximately centrally between the hot sides of the Peltier elements.

Preferably, the cool sides of the Peltier elements form each a section of the cooling face of the cooling layer of the condenser via heat spreaders. This makes it possible to form a large cooling face, in particular for cooling a process air flowing by, by means of comparatively small Peltier elements.

To create a low heat resistance between the Peltier elements and the heat pipe, a heat sink, especially of aluminum, extended through by the pipe section of the heat pipe may be arranged between the hot sides of the heat pump.

In order that the heat pipe is capable of effectively giving off the waste heat of the heat pump to the second condenser, a further pipe section is inserted in the cooling layer of the second condenser, in particular in a heat spreader forming a section of the cooling layer.

Advantageously, the condensers are adapted to be flown through by the cooling air independently of each other. Thus, it is conceivable that the first condenser is not flown through by the cooling air in the initial phase of the drying process so as to achieve a quicker cooling of the condenser.

In a further advantageous embodiment of the invention, a cooling air flow of the first condenser can be controlled via a control device, in particular a cover device. Alternatively, each condenser may be allocated a blower for controlling the cooling air flow which may be used independently of each other.

In accordance with the invention, a thermoelectric heat pump for a household appliance, in particular for a tumble drier, comprises a heat pump for discharging the waste heat. By means of the heat pipe it is possible to supply the waste heat in a flexible manner at some other position in the household appliance in particular to the process air. In the initially explained state of the art, for instance, in DE 201 01 641 U1, it is necessary for supplying the waste air of the thermoelectric pump to the process air that the thermoelectric heat pump is arranged between a supply and an outlet channel. By means of the heat pipe it is thus no longer necessary to supply the waste heat to the process air directly in the region of the thermoelectric heat pump.

In accordance with the invention, a condenser unit, in particular for a household appliance, in particular for a tumble drier, comprises a first and preferably a second condenser. These are arranged in series in the direction of a process air flow. The first condenser that is arranged in the direction upstream of the process air flow on a higher level than the second condenser comprises a thermoelectric heat pump for cooling the condenser and/or a process air. A waste heat of the thermoelectric heat pump is supplied to the second condenser via a heat pipe for heating the process air. Such a condenser unit may be used in an extremely energy-efficient manner, wherein in particular in the initial phase of a drying process the first condenser is cooled additionally by the heat pump, or the heat pump in this phase exclusively serves to cool the process air.

In accordance with the invention, a method for controlling a household appliance comprises the following steps:
a) Switching on the thermoelectric heat pump in an initial phase of a drying process of the household appliance;
b) switching off the thermoelectric heat pump after a predetermined period or at a predetermined temperature of the process air;
c) switching on the cooling air flow through the second condenser and/or through the first condenser.

The last step may also be performed prior to step a) or, for instance, simultaneously with step a), or between step a) and step b).

Advantageous further developments of the invention are the subject matter of further subclaims.

In the following, preferred embodiments of the invention will be explained in more detail by means of schematic drawings. The Figures show:
Figure 1 in a schematic illustration a tumble drier in accordance with a first embodiment;
Figure 2 in a schematic illustration a condenser of the tumble drier of Figure 1;
Figure 3 in a perspective illustration the condenser of Figure 2;
Figure 4 in a side view a thermoelectric heat pump of the condenser of Figure 2;
Figure 5 in a perspective illustration the thermoelectric heat pump along with a heat pipe of the condenser;
Figure 6 in a schematic illustration the tumble drier according to the first embodiment;
Figure 7 in a schematic illustration the tumble drier according to the first embodiment;
Figure 8 in a schematic illustration the tumble drier according to a second embodiment;
Figure 9 in a schematic illustration the tumble drier according to a third embodiment;
Figure 10 in a perspective illustration drive elements of the tumble drier; and
Figure 11 a wiring diagram of the tumble drier according to the second embodiment.

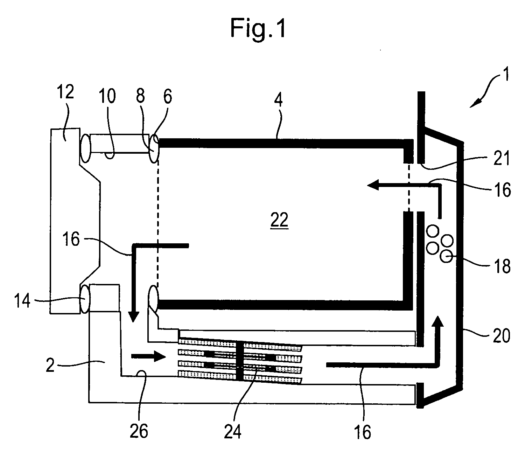

Figure 1 illustrates a household appliance designed as a tumble drier 1 in a schematic illustration according to a first embodiment. The tumble drier 1 comprises a drum 4 mounted to rotate in a drier housing 2. A - in Figure 1 - left front side of the drum 4 is designed to be opened, so that the drum 4 may, for instance, be charged and discharged with laundry via this front side. A left annular front face 6 of the drum 4 is sealed against the drier housing 2 via a drum seal 8. For charging and discharging of the drum 4, the drier housing 2 comprises also a cylindrical opening 10, the diameter of which corresponds roughly to that of the drum 4. The opening 10 is adapted to be closed by a drier door 12, wherein the drier door 12 in the closed state abuts in a sealing manner on the drier housing 2 via a door seal 14.

For the drying of, for instance, humid laundry, a process air indicated in Figure 1 with arrows 16 circulates in a closed circuit. The circuit comprises a heater 18 for heating the process air 16, wherein it is arranged, in Figure 1, at the right of the drum 4 in the drier housing 2. The heater 18 is shielded from the environment by a heater cover 20. Along with the heater cover 20, a supply and discharge channel for the process air 16 is additionally formed. Via a heater opening 21 arranged in Figure 1 in the region of the drum 4, process air 16 heated by the heater 18 gets, via openings formed in the - in Figure 1 - right front side of the drum 4, into a useful area 22 of the drum 4 in which, for instance, laundry to be dried is accommodated.

For cooling the process air 16, a condenser unit 24 according to the invention is arranged in the circuit of the process air 16. It is illustrated in a strongly simplified manner in Figure 1 and will be explained in more detail in the following Figures. The condenser unit 24 is arranged in an air passage 26 in Figure 1 below the drum 4. The air passage 26 is, at its left end portion, via a radial passage in communication with the opening 10 of the drier housing 2 and thus with the drum 4. Via its right end portion the air passage 26 is connected with the heater cover 20. A process air flow is generated by an impeller (not illustrated), so that the process air 16 then circulates in the circuit from the drum 4 via the condenser unit 24 arranged in the air passage 26, the heater 18 arranged in the heater cover 20, and back to the drum 4.

For drying, for instance, humid laundry in the drum 4, the process air 16 is heated by the heater 18, so that the relative air humidity of the process air 16 decreases. The dry-hot process air 16 is routed through the humid laundry circulated in the drum 4 and absorbs its humidity by evaporation. The humid-hot process air 16 is subsequently cooled by the condenser unit 24 designed as an air/air heat exchanger. By the cooling of the process air 16 via the condenser unit 24, the dew point temperature thereof is undercut, so that humidity condenses out of the process air as water. This water is collected by appliances, for instance, a sump (not illustrated), or is discharged. Subsequently, the dry-cool process air 16 is again supplied to the heater 18 for heating.

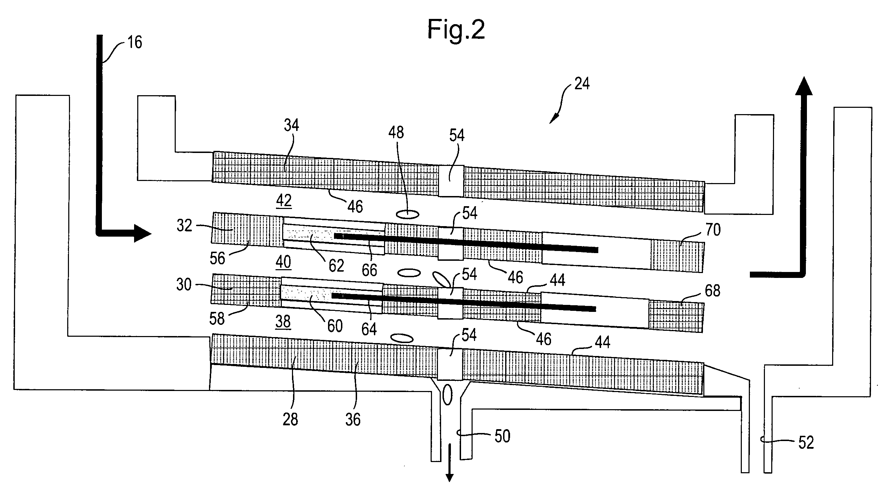

Figure 2 shows in an enlarged illustration the condenser unit 24 of Figure 1. The condenser unit 24 comprises four cooling layers 28, 30, 32, and 34 spaced apart in parallel. Each cooling layer 28 to 34 comprises a plurality of finned channels 36 having a roughly rectangular cross-section and pointing into the drawing plane in Figure 2. They are adapted to be flown through by an ambient air that is referred to as cooling air in the following for cooling the process air 16.

The cooling layers 28 and 30 jointly confine a bottom air passage 38, the middle cooling layers 30 and 32 an air passage 40, and the cooling layers 32 and 34 a top air passage 42, wherein the passages 38 to 42 are adapted to be flown through by the process air 16 approximately perpendicularly to the cooling air. The cooling layers 28 to 34 consist of aluminum having a good heat conduction. The middle cooling layers 30, 32 in Figure 2 are each adapted to be circulated around by the process air 16 from their top and bottom cooling faces 44 or 46, respectively. The top cooling layer 34 in Figure 2 adjoins to the air passage 42 with its bottom cooling face 46 only, and the bottom cooling layer 28 adjoins to the air passage 38 with its top cooling face 44.

In operation of the tumble drier 1 of Figure 1, the humid-hot process air 16 gets through condenser unit 24 and is cooled by it. The process air 16 flows through the air passages 38 to 42 and gives off heat to the cooling air flowing through the cooling layers 28 to 34 approximately perpendicularly to the process air 16 and spatially separated therefrom. The cooling layers 28 to 34 are inclined such that condensed liquid or water 48 may flow off approximately in flow direction of the process air 16 along the cooling faces 44 of the cooling layers 28 to 32 to a central sump 50 and to a sump 52 positioned at the end of the condenser unit 24.

The individual cooling layers 28 to 34 are each divided by a thermal insulator 54 approximately in the center into a left and a right cooling layer section in Figure 2. The insulators 54 comprise openings so that condensed liquid 48 may flow off across them to the sump 50.

Left cooling sections 56 and 58 of the two middle cooling layers 30 or 32, respectively, in Figure 2 each comprise thermoelectric heat pumps 60, 62 that are arranged approximately in the center. These are sandwiched conventional Peltier elements used for cooling the process air 16 and/or the condenser unit 24. The Peltier element is an electrothermic converter generating a temperature difference based on the Peltier effect if current flows through it.

The heat pumps 60, 62 completely extend through the cooling layers 30 and 32 in the direction of the drawing plane in the embodiment. Heat pipes 64, 66 are provided for discharging a waste heat of the heat pumps 60, 62. Such heat pipes 64, 66 are sufficiently known from prior art. They are heat transmitters enabling a high heat flow density by utilizing the evaporation heat of a substance, i.e. large amounts of heat can be transported on a small cross sectional area. The heat pipes 64, 66 discharge the waste heat of the heat pumps 60, 62 and route it to right cooling sections 68 and 70 of the middle cooling layers 30 and 32 in Figure 2.

The left and right cooling sections 56, 58 or 68, 70, respectively, of the cooling layers 28 to 34 of the condenser unit 24 may also be designed as two condensers arranged in series.

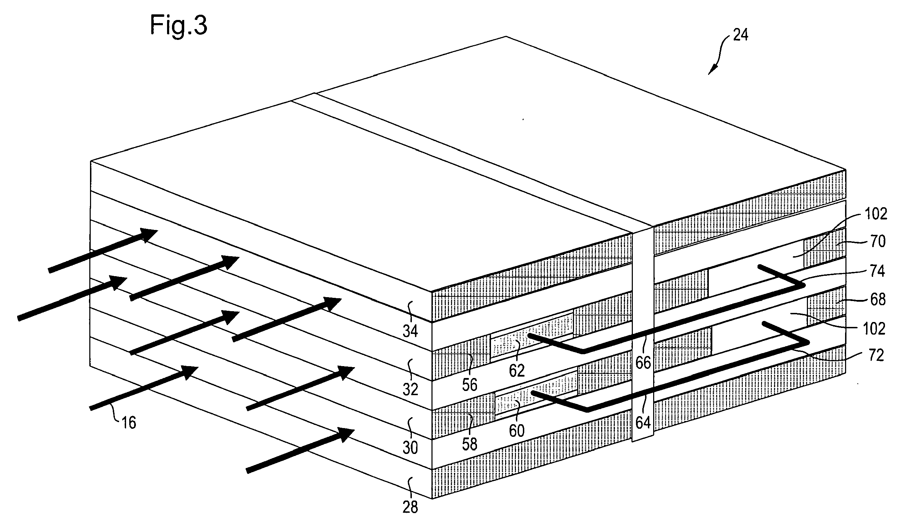

Figure 3 shows the condenser unit 24 of Figure 2 in a perspective illustration. The spatial extension of the cooling layers 28 to 34 is illustrated here. The heat pumps 60 and 62 each extend completely through the respective cooling layer 30 and 32. A breadth of the heat pump 60 and 62 measured approximately in the direction of the flow of the process air 16 corresponds roughly to a third of the breadth of a respective left cooling section 56 or 58 of the cooling layers 32 or 30, respectively. A pipe section (not illustrated) of the heat pipes 64 completely extends through the sandwiched arrangement of the heat pumps 60 or 62, respectively, in the longitudinal direction thereof approximately in the center. A U-shaped outer pipe section 72 and 74 of the heat pipes 64 or 66, respectively, extends, spaced away from the heat pumps 60 and 62, to the condenser unit 24 along the cooling layers 30 or 32, respectively, up to the right cooling sections 68 and 70 of the cooling layers 30 or 32, respectively. Subsequently, the heat pipes 64 and 66 completely extend through the right cooling sections 68 and 70 with a pipe section (not illustrated) roughly in the direction transversely to the flow direction of the process air 16. The pipe sections (not illustrated) are arranged approximately centrally of the cooling sections 68, 70. The U-shaped outer pipe sections 72, 74 of the heat pipes 64, 66 are preferably thermally insulated.

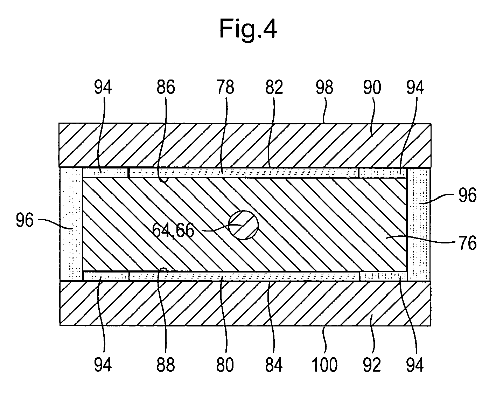

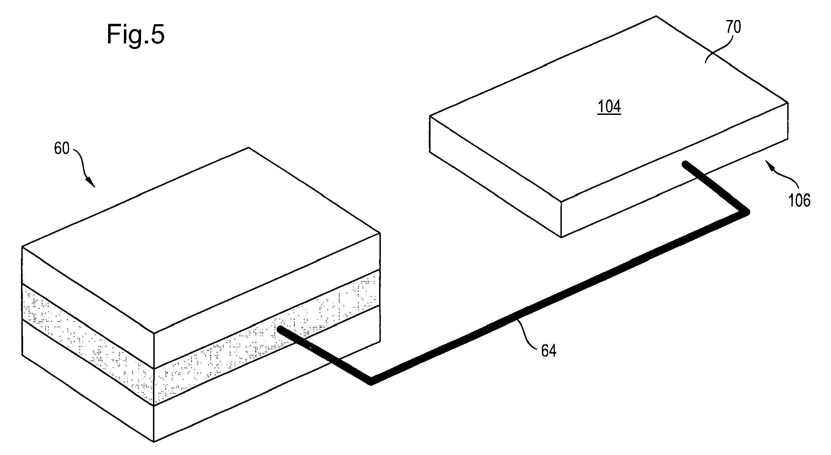

In Figure 4, the thermoelectric heat pump 60 or 62, respectively, of Figure 3 is illustrated in a schematic cross sectional view. The heat pumps 60, 62 comprise a heat sink 76 consisting preferably of aluminum and having a roughly rectangular cross section. On the top and bottom faces of the heat sink 76, Peltier elements 78, 80 each is arranged which are adapted to be supplied with current via electrical connections that are not illustrated. A respective cool side 82 and 84 of the Peltier elements 78 or 80, respectively, points away from the heat sink 76 while a hot side 86 and 88 of the Peltier elements 78 or 80, respectively, roughly abuts on the heat sink 76. The breadth of the Peltier elements 78 and 80 is somewhat smaller than that of the heat sink 76, and the Peltier elements 78, 80 are arranged approximately centrally with respect to the heat sink 76. A heat spreader 90 or 92, respectively, having a rectangular cross section abuts roughly on a respective cool side 82 or 84 of the Peltier elements 78 or 80, respectively. A vertical strength of a respective heat spreader 90 and 92 in Figure 5 corresponds approximately to half the strength of the heat sink 76. A breadth of the heat spreaders 90, 92 is somewhat larger than the breadth of the heat sink 76. Insulation elements 94 are arranged between the heat sink 76 and the respective heat spreader 90 and 92 next to the Peltier element 78 or 80, respectively. Further Insulation elements 96 are arranged between the heat spreaders 90 and 92. A left and a right side face of the heat sink 76 is thermally insulated from the environment by the insulation elements 96. The pipe section of the heat pipe 64 or 66, respectively, extends through the heat sink 76 approximately centrally.

The heat pumps 60, 62 are integrated such into the cooling layers 30 or 32, respectively, in Figure 2 that cooling faces 98, 100 of the heat spreader 90 or 92, respectively, facing away from the heat sink 76 of Figure 5 form an approximately plane face together with the cooling faces 44 or 46, respectively, of the cooling layers 30 or 32, respectively.

Figure 5 shows in a perspective illustration the heat pump 60 together with the heat pipe 64 and a heat spreader 102 of Figure 3. An end section (not illustrated) of the heat pipe 64 extends through the heat spreader 102 approximately centrally. It is designed such that its top and bottom spreader faces 104 and 106 in Figure 5 form an approximately plane face together with the top and bottom cooling faces 44 and 46 of the cooling layer 30 of Figure 2.

In the following, the functioning of the condenser unit 24 will be explained in detail by means of Figures 2 to 5.

The thermoelectric heat pumps 60, 62 of Figure 3 serve to cool the condenser unit 24 and/or the process air 16. To this end, Peltier elements 78, 80 of Figure 4 are supplied with current, so that their cool sides 82, 84 are cooled and their hot sides 86, 88 are heated. Thus, a temperature gradient is produced between the heat spreaders 90, 92 and the heat sink 76 positioned therebetween. Heat is absorbed from the process air 16 and the cooling layers 30, 32 of the condenser unit 24 in particular via the cooling faces 98 and 100 from the respective heat spreader 90 or 92, respectively. The waste heat of the Peltier elements 78, 80 is routed via the respective hot sides 86 and 88 to the heat sink 76 and is discharged via the heat pipe 64 and supplied to the heat spreaders 102, see Figure 3. These then give the waste heat off to the right section of the condenser unit 24 in Figure 3. Thus, the cooled and dried process air 16 is heated again, which serves as an efficient pre-heating of the process air 16 prior to the supplying to the heater 18 of Figure 1.

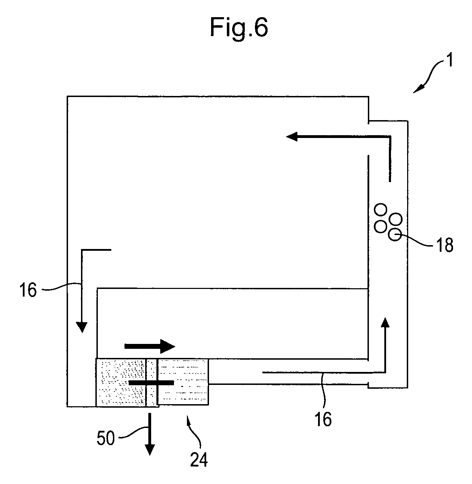

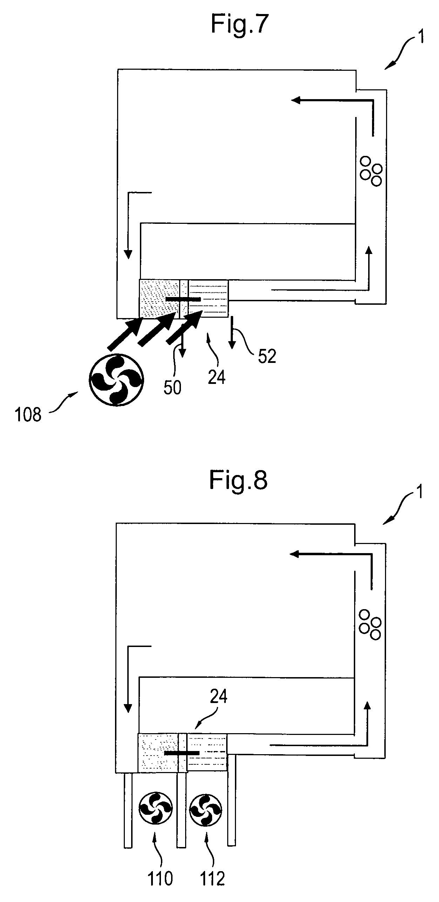

In order that the tumble drier 1 of Figure 1 is used in an energy-efficient manner it is advantageous to use the thermoelectric pumps 60, 62 at the beginning of a drying cycle since the condenser unit 24 is still warm and thus the process air 16 is cooled only insufficiently by the cooling air alone. By means of the thermoelectric heat pumps 60, 62 it is thus possible to perform an efficient cooling of the process air 16 even at the beginning of a drying cycle of the tumble drier 1. This will be explained in detail by means of Figures 6 and 7.

Figures 6 and 7 show a simplified illustration of the tumble drier 1 of Figure 1. Figure 6 illustrates the state of the tumble drier 1 at the beginning of a drying cycle. A blower for the cooling air of the condenser unit 24 is switched off, so that no warm ambient air flows through the condenser unit 24. This is referred to as "mode 1 ". The process air 16 is thus merely cooled via the thermoelectric heat pumps 60, 62 of Figure 3. The cooling is hence performed in the left section of the condenser unit 24, so that condensed liquid or water, respectively, exits substantially from the middle sump 50. The cooled process air 16 is then heated again in the right section of the condenser unit 24 by the heat recovery of the heat pumps 60, 62 via the heat pipes 64, 66. The preheated process air 16 is then continued to be heated by the heater 18. By the pre-heating of the process air 16, the energy required by the heater 18 for heating the process air 16 is substantially smaller.

Figure 7 shows a "mode 2" in which the thermoelectric heat pumps 60, 62 of Figure 3 are switched off and a blower 108 for supplying cooling air to the condenser unit 24 is switched on. The tumble drier 1 is conventionally operated in this "mode 2". Condensed liquid then exits at both sumps 50, 52.

Figure 8 shows a second embodiment of the tumble drier 1 in a schematic illustration. In contrast to the first embodiment of Figures 1 to 7, two blowers 110, 112 are provided here. The first blower 110 positioned at the left in Figure 8 serves to supply cooling air to the left section of the condenser unit 24 and the second, right blower 112 to supply cooling air to the right section of the condenser unit 24. Thus, it is possible during "mode 1" to additionally cool the right section of the condenser unit 24 independently of the left section by the cooling air. This is either performed over the entire operating time of "mode 1" or, for instance, at the end of the operating time so as to pre-cool the right section of the condenser unit 24 when switching into "mode 2".

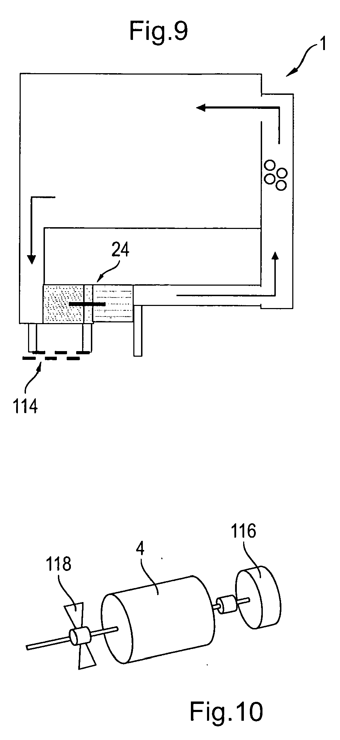

Figure 9 shows a third embodiment of the tumble drier 1 in a schematic illustration. Instead of two blowers, see Figure 8, a blower (not illustrated) like in the first embodiment is arranged, wherein, however, an electromechanical shutter 114 is provided. This electromechanical shutter 114 is adapted to initiate and terminate a cooling air flow to the left section of the condenser unit 24, see also Figure 2. Thus, the shutter 114 is closed in the "mode 1", so that, in correspondence with Figure 8, only the right section of the condenser unit 24 can be supplied with cooling air. The blower (not illustrated) may then be in continuous operation for both modes 1 and 2, for instance.

Figure 10 shows a coupling of an impeller 116 for building up a process air flow, of a blower 118 for the cooling air of the condenser unit 24 of Figure 9, and of the drum 4. This serves to illustrate that the impeller 116 and the blower 118 in the tumble drier 1 of Figure 9 are simply coupled with a drive for the drum 4.

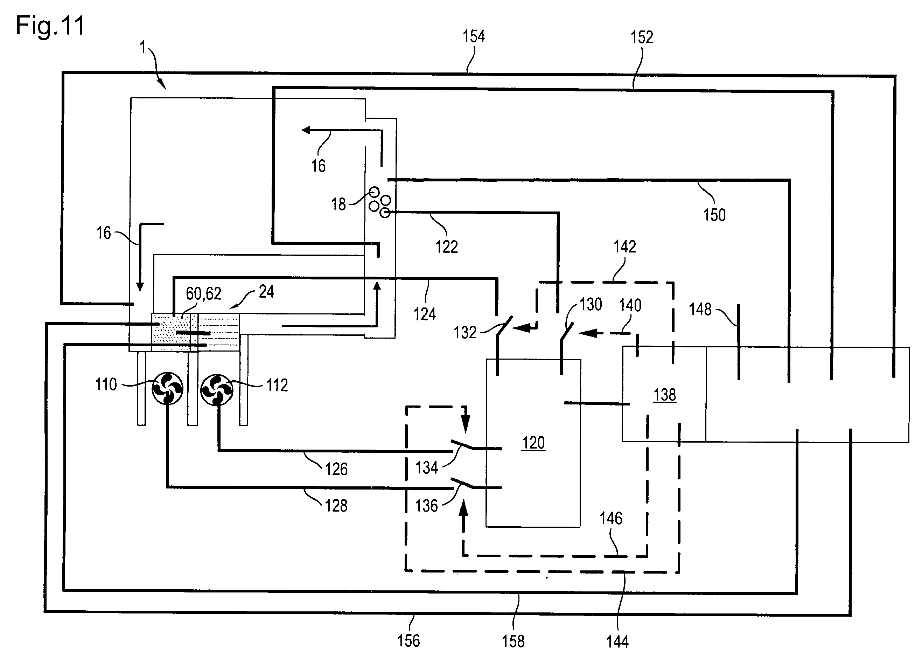

Figure 11 shows in a simplified wiring diagram a current supply and a control of the tumble drier 1 of Figure 8 pursuant to the second embodiment. By a power supply 120, the heater 18, the thermoelectric heat pumps 60, 62, the condenser unit 24, and the blowers 110, 112 are electrically connected via electric lines 122, 124, 126 or 128, respectively. In each electric line 122 to 128, an electric switch 130 to 136 is arranged to switch the current supply to the connected elements on and off. In addition to the power supply 120, a control unit 138 is provided which is, via control lines 140, 142, 144, and 146, connected with a respective switch 130, 132, 134, and 136 for the control thereof.

The control unit 138 furthermore comprises a plurality of measurement inputs. One measurement input is connected via a measuring line 148 with a sensor for measuring an ambient air temperature. Another measurement input is connected via a measuring line 150 with a sensor for measuring a post heater temperature and humidity, said sensor being positioned downstream of the heater 18 in flow direction of the process air 16. Via a measuring line 152, the control unit 148 is connected with a sensor that is positioned upstream of the heater 18 in flow direction of the process air 16 and that measures the pre-heater temperature and the humidity in this region. Via the measuring line 154, a sensor is connected with the control unit 138, said sensor measuring the temperature and humidity of the process air 16 before entering the condenser unit 24. Furthermore, the temperatures of the condenser unit 24 are measured, wherein a sensor is arranged in the left section, see also Figure 3, of the condenser unit 24 and is connected with the control unit 138 via a measuring line 156. A sensor arranged in the right section of the condenser unit 24 is connected to the control unit 138 via a measuring line 158.

The blowers 110, 112, the thermoelectric heat pumps 60, 62, the condenser unit 24, and the heater 18 are then controlled as a function of the values measured by the sensors.

Disclosed is a household appliance, in particular a tumble drier, comprising a drying device for drying a process air routed in a circuit and discharged from a useful area, in particular a drier drum. The household appliance further comprises a heating device for heating the process air supplied to the useful area. The drying device comprises a condenser. The condenser comprises a thermoelectric heat pump, in particular a Peltier element, for cooling the condenser and/or the process air.

### List of Reference Signs

- 1: tumble drier
- 2: drier housing
- 4: drum
- 6: annular front face
- 8: drum seal
- 10: opening
- 12: drier door
- 14: door seal
- 16: process air
- 18: heater
- 20: heater cover
- 21: heater opening
- 22: useful area
- 24: condenser unit
- 26: air passage
- 28: cooling layer
- 30: cooling layer
- 32: cooling layer
- 34: cooling layer
- 36: finned channel
- 38: bottom air passage
- 40: middle air passage
- 42: top air passage
- 44: cooling face
- 46: cooling face
- 48: condensed liquid
- 50: sump
- 52: sump
- 54: insulator
- 56: cooling sections
- 58: cooling sections
- 60: heat pump
- 62: heat pump
- 64: heat pipe
- 66: heat pipe
- 68: cooling sections
- 70: cooling sections
- 72: pipe section
- 74: pipe section
- 76: heat sink
- 78: Peltier element
- 80: Peltier element
- 82: cool side
- 84: cool side
- 86: hot side
- 88: hot side
- 90: heat spreader
- 92: heat spreader
- 94: insulation element
- 96: insulation element
- 98: cooling face
- 100: cooling face
- 102: heat spreader
- 104: spreader face
- 106: spreader face
- 108: blower
- 110: blower
- 112: blower
- 114: shutter
- 116: impeller
- 118: blower
- 120: power supply
- 122: line
- 124: line
- 126: line
- 128: line
- 130: switch
- 132: switch
- 134: switch
- 136: switch
- 138: control unit
- 140: control line
- 142: control line
- 144: control line
- 146: control line
- 148: measuring line
- 150: measuring line
- 152: measuring line
- 154: measuring line
- 156: measuring line
- 158: measuring line

## Claims

1. A condenser unit comprising a thermoelectric heat pump (60, 62) that is arranged such that a first condenser (24) arranged in said condenser unit and/or a process air (16) are adapted to be cooled by said heat pump (60, 62) comprising a heat pipe (64, 66), whereby a waste heat of the heat pump (60, 62) is discharged via the heat pipe (64, 66), and wherein the heat pump (60, 62) is constructed with at least two Peltier elements (78, 80), the condenser unit further comprising at least one cooling layer (30, 32), **characterized in that** the hot sides (86, 88) of the Peltier elements (78, 80) are positioned opposite each other and facing each other and the respective cool sides (82, 84) in the direction of a respective cooling face (44, 46) of said cooling layer (30, 32), wherein a pipe section of the heat pipe (64, 66) for discharging the waste heat is positioned between the hot sides (86, 88) of the Peltier elements (78, 80).

2. A household appliance, in particular a tumble drier, comprising a drying device for drying a process air (16) routed in a circuit and discharged from a useful area (22), in particular a drier drum (4), and a heater (18) for heating the process air (16) supplied to the useful area (22), **characterized in that** the drying device comprises a condenser unit according to claim 1, which is designed in particular as an air/air heat exchanger, whereby the thermoelectric heat pump (60, 62) is used for cooling said first condenser (24) and/or said process air (16), wherein the waste heat of said heat pump (60, 62) is supplied to said process air (16) via said heat pipe (64, 66).

3. The household appliance according to claim 2, wherein said first condenser (24) comprises said at least one cooling layer (28, 30, 32, 34) adapted to be flown through by a cooling air and circulated around by said process air (16) for cooling said process air (16), said cooling layer (28, 30, 32, 34) being arranged such that condensed liquid flows off across it to a sump (50, 52).

4. The household appliance according to claim 3, wherein a section of said cooling layer (28, 30, 32, 34) forms said heat pump (60, 62).

5. The household appliance according to one or several of claims 2 to 4, wherein a second condenser (24) is provided in series to the first condenser (24) comprising the heat pump (60, 62) and downstream thereof viewed in the direction of the process air flow, said second condenser (24) being thermally connected with said first condenser (24) via said heat pipe (64, 66).

6. The household appliance according to one or several of claims 3 to 5, wherein the pipe section of said heat pipe (64, 66) is positioned centrally between said hot sides (86, 88) for discharging the waste heat of said Peltier elements (78, 80).

7. The household appliance according to one or several of claims 3 to 6, wherein said cool sides (82, 84) of said Peltier elements (78, 80) each form a section of said cooling face (44, 46) of said cooling layer (30, 32) of said condenser (24) via heat spreaders.

8. The household appliance according to claims 6 or 7, wherein a heat sink (76), in particular of aluminum, extended through by the pipe section of said heat pipe (64, 66) is positioned between said hot sides (86, 88) of said Peltier elements (78, 80).

9. The household appliance according to claim 5, wherein a further pipe section of said heat pipe (64, 66) extends through the cooling layer (30, 32), in particular a heat spreader (102) forming a section of said cooling layer (30, 32), of said second condenser (24).

10. The household appliance according to claims 3 and 5, wherein said condensers (24) are adapted to be flown through by said cooling air independently of each other.

11. The household appliance according to claim 10, wherein the process air flow of the first condenser (24) is adapted to be controlled via a control device (114), in particular a cover device, and/or wherein each condenser (24) is assigned with a blower for controlling the process air flow, which may be used independently of each other.

12. A method for controlling a household appliance according to claim 5 or 9 or 10 or 11, comprising the steps of:
a) switching on the thermoelectric heat pump (60, 62) in an initial phase of a drying process during operation of the household appliance;
b) switching off the thermoelectric heat pump (60, 62) after a predetermined period or at a predetermined temperature of the process air (16);
c) switching on the cooling air flow through the second condenser (24) and/or through the first condenser (24) prior to step a) or simultaneously with step a) or between step a) and b).

## Patentansprüche

1. Kondensatoreinheit mit einer thermoelektrischen Wärmepumpe (60, 62), die derart angeordnet ist, dass ein in der Kondensatoreinheit angeordneter erster Kondensator (24) und/oder eine Prozessluft (16) durch die Wärmepumpe (60, 62) kühlbar sind, umfassend eine heat pipe (64, 66), wobei eine Abwärme der Wärmepumpe (60, 62) über die heat pipe (64, 66) abgeführt ist, und wobei die Wärmepumpe (60, 62) mit zumindest zwei Peltier- Elementen (78, 80) ausgeführt ist, die Kondensatoreinheit weiterhin zumindest eine Kühlschicht (30, 32) umfassend, **dadurch gekennzeichnet, dass** die Wärmeseiten (86, 88) des Peltier-Elements (78, 80) einander gegenüber liegend und aufeinander zuweisend angeordnet sind, und die jeweiligen Kühlseiten (82, 84) in Richtung einer jeweiligen Kühlfläche (44, 46) der Kühlschicht (30, 32), wobei zwischen den Wärmeseiten (86, 88) ein Rohrabschnitt der heat pipe (64, 66) zum Abführen der Abwärme angeordnet ist.

2. Haushaltsgerät, insbesondere Wäschetrockner, mit einer Trocknungsvorrichtung zum Trocknen einer in einem Kreislauf geführten und von einem Nutzbereich (22), insbesondere einer Trockentrommel (4), abgeführten Prozessluft (16), und mit einer Heizvorrichtung (18) zum Erwärmen der dem Nutzbereich (22) zugeführten Prozessluft (16), **dadurch gekennzeichnet, dass** die Heizvorrichtung eine Kondensatoreinheit gemäß Anspruch 1 aufweist, die insbesondere als Luft/Luft-Wärmetauscher ausgebildet ist, wobei die thermoelektrische Wärmepumpe (60, 62) zur Kühlung des ersten Kondensators (24) und/oder der Prozessluft (16) dient, wobei die Abwärme der Wärmepumpe (60, 62) über die heat pipe (64, 66) der Prozessluft (16) zugeführt ist.

3. Haushaltsgerät nach Anspruch 2, wobei der erste Kondensator (24) die zumindest eine von einer Kühlluft durchströmbare und von der Prozessluft (16) umströmte Kühlschicht (28, 30, 32, 34) zum Kühlen der Prozessluft (16) aufweist, die derart angeordnet ist, dass kondensierte Flüssigkeit über diese zu einem Ablauf (50, 52) abfließt.

4. Haushaltsgerät nach Anspruch 3, wobei ein Abschnitt der Kühlschicht (28, 30, 32, 34) die Wärmepumpe (60, 62) bildet.

5. Haushaltsgerät nach einem oder mehreren der Ansprüche 2 bis 4, wobei in Reihe zum die Wärmepumpe (60, 62) aufweisenden ersten Kondensator (24) und in Richtung der Strömung der Prozessluft gesehen stromabwärts von diesem ein zweiter Kondensator (24) vorgesehen ist, der über die heat pipe (64, 66) mit dem ersten Kondensator (24) thermisch verbunden ist.

6. Haushaltsgerät gemäß einem oder mehreren der Ansprüche 3 bis 5, wobei der Rohrabschnitt der heat pipe (64, 66) mittig zwischen den Wärmeseiten (86, 88) aufgenommen ist zum Abführen der Abwärme der Peltier-Elemente (78, 80).

7. Haushaltsgerät nach einem oder mehreren der Ansprüche 3 bis 6, wobei die Kühlseiten (82, 84) der Peltier-Elemente (78, 80) über Wärmeverteiler jeweils einen Abschnitt der Kühlfläche (44, 46) der Kühlschicht (30, 32) des Kondensators (24) bilden.

8. Haushaltsgerät gemäß Anspruch 6 oder 7, wobei zwischen den Wärmeseiten (86, 88) der Peltier-Elemente (78, 80) eine von dem Rohrabschnitt der heat pipe (64, 66) durchsetzte Wärmesenke (76), insbesondere aus Aluminium angeordnet ist.

9. Haushaltsgerät gemäß Anspruch 5, wobei ein weiterer Rohrabschnitt der heat pipe (64, 66) die Kühlschicht (30, 32), insbesondere einen Abschnitt der Kühlschicht (30, 32) bildenden Wärmeverteiler (102), des zweiten Kondensators (24) durchsetzt.

10. Haushaltsgerät nach den Ansprüchen 3 und 5, wobei die Kondensatoren (24) unabhängig voneinander von der Kühlluft durchströmbar sind.

11. Haushaltsgerät nach Anspruch 10, wobei der Prozessluftstrom des ersten Kondensators (24) über eine Steuervorrichtung (114), insbesondere eine Blendenvorrichtung, steuerbar ist, und/oder wobei jedem Kondensator (24) ein Gebläse zum Steuern des Prozessluftstroms zugeordnet ist, die unabhängig voneinander einsetzbar sind.

12. Verfahren zur Steuerung eines Haushaltsgeräts gemäß Anspruch 5 oder 9 oder 10 oder 11 mit den Schritten:
a) Einschalten der thermoelektrischen Wärmepumpe (60, 62) in einer Anfangsphase eines Trocknungsprozesses im Einsatz des Haushaltsgerätes;
b) Abschalten der thermoelektrischen Wärmepumpe (60, 62) nach einer vorbestimmten Zeit oder bei einer vorbestimmten Temperatur der Prozessluft (16);
c) Einschalten des Kühlluftstroms durch den zweiten Kondensator (24) und/oder durch den ersten Kondensator (24) vor Schritt a) oder gleichzeitig mit Schritt a) oder zwischen Schritt a) und b).

## Revendications

1. Unité de condenseur comprenant une pompe à chaleur thermoélectrique (60, 62) qui est agencée de sorte qu'un premier condenseur (24) agencé dans ladite unité de condenseur et/ou un air de traitement (16) sont adaptés pour être refroidis par ladite pompe à chaleur (60, 62) comprenant un échangeur à tube (64, 66), moyennant quoi une chaleur résiduelle de la pompe à chaleur (60, 62) est déchargée via l'échangeur à tube (64, 66) et dans laquelle la pompe à chaleur (60, 62) est construite avec au moins deux éléments de Peltier (78, 80), l'unité de condenseur comprenant en outre au moins une couche de refroidissement (30, 32), **caractérisée en ce que** les côtés chauds (86, 88) des éléments de Peltier (78, 80) sont positionnés de manière opposée entre eux et se faisant face et les côtés froids (82, 84) respectifs dans la direction d'une face de refroidissement (44, 46) respective de ladite couche de refroidissement (30, 32), dans laquelle une section de tube de l'échangeur à tube (64, 66) pour décharger la chaleur résiduelle est positionnée entre les côtés chauds (86, 88) des éléments de Peltier (78, 80).

2. Appareil électroménager, en particulier un sèche-linge, comprenant un dispositif de séchage pour sécher un air de traitement (16) acheminé dans un circuit et déchargé à partir d'une zone utile (22), en particulier un tambour de sèche-linge (4), et un dispositif de chauffage (18) pour chauffer l'air de traitement (16) amené à la zone utile (22), **caractérisé en ce que** le dispositif de séchage comprend une unité de condenseur selon la revendication 1, qui est conçue en particulier sous la forme d'un échangeur de chaleur air/air, moyennant quoi la pompe à chaleur thermoélectrique (60, 62) est utilisée pour refroidir ledit premier condenseur (24) et/ou ledit air de traitement (16), dans lequel la chaleur résiduelle de ladite pompe à chaleur (60, 62) est amenée audit air de traitement (16) via ledit échangeur à tube (64, 66).

3. Appareil électroménager selon la revendication 2, dans lequel ledit premier condenseur (24) comprend ladite au moins une couche de refroidissement (28, 30, 32, 34) adaptée pour être parcourue par un air de refroidissement et circulée autour dudit air de traitement (16) pour refroidir ledit air de traitement (16), ladite couche de refroidissement (28, 30, 32, 34) étant agencée de sorte que le liquide condensé s'écoule sur cette dernière jusqu'à un bassin collecteur (50, 52).

4. Appareil électroménager selon la revendication 3, dans lequel une section de ladite couche de refroidissement (28, 30, 32, 34) forme ladite pompe à chaleur (60, 62).

5. Appareil électroménager selon une ou plusieurs des revendications 2 à 4, dans lequel un second condenseur (24) est prévu en série par rapport au premier condenseur (24) comprenant la pompe à chaleur (60, 62) est en aval de ce dernier, observé dans la direction de l'écoulement d'air de traitement, ledit second condenseur (24) est raccordé thermiquement avec ledit premier condenseur (24) via ledit échangeur à tube (64, 66).

6. Appareil électroménager selon une ou plusieurs des revendications 3 à 5, dans lequel la section de tube dudit échangeur à tube (64, 66) est positionnée de manière centrale entre lesdits côtés chauds (86, 88) pour décharger la chaleur résiduelle desdits éléments de Peltier (78, 80).

7. Appareil électroménager selon une ou plusieurs des revendications 3 à 6, dans lequel lesdits côtés froids (82, 84) desdits éléments de Peltier (78, 80) forment chacun une section de ladite face de refroidissement (44, 46) de ladite couche de refroidissement (30, 32) dudit condenseur (24) via des diffuseurs de chaleur.

8. Appareil électroménager selon les revendications 6 ou 7, dans lequel un dissipateur de chaleur (76), en particulier de l'aluminium, étendu à travers la section de tube dudit échangeur à tube (64, 66), est positionné entre lesdits côtés chauds (86, 88) desdits éléments de Peltier (78, 80).

9. Appareil électroménager selon la revendication 5, dans lequel une autre section de tube dudit échangeur à tube (64, 66) s'étend à travers la couche de refroidissement (30, 32), en particulier un diffuseur de chaleur (102) formant une section de ladite couche de refroidissement (30, 32) dudit second condenseur (24).

10. Appareil électroménager selon les revendications 3 et 5, dans lequel lesdits condenseurs (24) sont adaptés pour être parcourus par ledit air de refroidissement indépendamment les uns des autres.

11. Appareil électroménager selon la revendication 10, dans lequel l'écoulement d'air de traitement du premier condenseur (24) est adapté pour être commandé via un dispositif de commande (114), en particulier un dispositif de couvercle, et/ou dans lequel chaque condenseur (24) est affecté d'une soufflante pour commander l'écoulement d'air de traitement, qui peuvent être utilisés indépendamment l'un de l'autre.

12. Procédé pour commander un appareil électroménager selon la revendication 5 ou 9 ou 10 ou 11, comprenant les étapes consistant à :
a) mettre en marche la pompe à chaleur thermoélectrique (60, 62) dans une phase initiale d'un processus de séchage pendant le fonctionnement de l'appareil électroménager ;
b) arrêter la pompe à chaleur thermoélectrique (60, 62) après une période prédéterminée ou à une température prédéterminée de l'air de traitement (16) ;
c) mettre en marche l'écoulement d'air de refroidissement à travers le second condenseur (24) et/ou à travers le premier condenseur (24) avant l'étape a) ou simultanément à l'étape a) ou entre l'étape a) et l'étape b).
